# EUROPÄISCHE PATENTANMELDUNG

(11) **EP 4 703 893 A1**
(43) Veröffentlichungstag der Anmeldung: **04.03.2026**
(21) Anmeldenummer: 24197252.0
(22) Anmeldetag: 29.08.2024
(51) Int. Cl.: G06F 11/34

(54) **COMPUTERIMPLEMENTIERTES VERFAHREN SOWIE ANORDNUNG ZUM TESTEN EINER BENUTZERERFAHRUNG ZUMINDEST EINES TEILS, INSBESONDERE DER NUTZERSCHNITTSTELLE, EINER SOFTWARE**

(71) Anmelder: Siemens Aktiengesellschaft, 80333 München (DE)
(72) Erfinder: Boulila, Naoufel, 80809 München (DE); Röse, Kerstin, 91056 Erlangen (DE); Schumm, Bernhard, 81927 München (DE); Steinke, Ines, 81825 München (DE)
(74) Vertreter: Siemens Patent Attorneys

(57) **Zusammenfassung**

Die Erfindung betrifft ein computerimplementiertes Verfahren zum Testen einer Benutzererfahrung zumindest eines Teils, insbesondere der Nutzerschnittstelle, einer Software, bei dem eine Analyse von während einer Durchführung eines Testverfahrens zu zumindest dem Teil der Software erfassten, zumindest mit einer Nutzeraktivität einer Testperson korrelierenden Daten aufgrund von zumindest einem erfassten physiologischen Parameter der Testperson auf eine Untermenge der Daten beschränkt wird. Ferner betrifft die Erfindung eine Anordnung zur Durchführung des Verfahrens.

## Beschreibung

Die Erfindung betrifft ein computerimplementiertes Verfahren zum Testen einer Benutzererfahrung zumindest eines Teils, insbesondere der Nutzerschnittstelle, einer Software gemäß dem Oberbegriff des Anspruchs 1 sowie eine Anordnung zum Testen einer Benutzererfahrung zumindest eines Teils, insbesondere der Nutzerschnittstelle, einer Software gemäß Oberbegriff des Anspruchs 12.

In der Softwareentwicklung hat die Erfahrung eines Nutzers mit der Software, insbesondere der Benutzeroberfläche, eine große Bedeutung. Daher ist es bekannt, dass für die Optimierung dieser auch als so genannte "User Experience" (UX) bezeichneten Größe Tests, beispielsweise mit Usern von Kunden der Software-Produktentwicklung (Business-to-Consumer, B2C) und/oder Usability-Sprint-Tests (z. B. in Software-Entwicklungsprojekten) für Business-Kunden, durchgeführt werden. Bekannte Methoden, wie beispielweise die so genannten "Usability-Tests" und der "Thinking Aloud" Ansatz bzw. Test, sind sehr aufwändig in der Datenauswertung.

Es ist bekannt, dass in der Regel bei Usability-Tests eine jeweilige Testperson vorgegebene Aufgaben bearbeitet und die Benutzererfahrung (User Experience, UX) der Benutzeroberfläche bei der Aufgabenbewältigung anhand von Skalen oder Fragen bewertet. Zusätzlich können gegebenenfalls durch einen Testleiter Einschätzungen, beispielsweise mithilfe von Skalen, zur UX bei der Aufgabenbearbeitung für den Testteilnehmer erhoben werden.

Thinking Aloud und, insbesondere moderierte, Usability-Tests sind weitere state-of-the-art Methoden zur UX-Evaluation. Dabei äußert die Testperson, die den UX-Test anhand von vorgegebenen Aufgaben an der Benutzeroberfläche eines Geräts (z. B. einer Maschine, eines PCs) durchführt, ihre Gedanken, Erwartungen und Gefühle bezüglich der Interaktion mit der zu evaluierenden Benutzeroberfläche. Diese Äußerungen können für nachgelagerte systematische Auswertungen elektronisch aufgezeichnet werden.

Die Auswertung der erhobenen Daten für Usability-Tests und Thinking Aloud nimmt viel Zeit in Anspruch. Da alle Informationen der jeweiligen Testperson zu Auswertungszwecken analysiert werden, ist die Auswertung der erhobenen Daten nicht effizient und sehr kostspielig.

Die der Erfindung zugrundeliegende Aufgabe ist es daher eine Lösung anzugeben, die den Nachteil des Standes der Technik überwindet, insbesondere ist es die Aufgabe der Erfindung ein effizientes und aufwandsarmes Verfahren zum Testen einer Benutzererfahrung anzugeben.

Diese Aufgabe wird ausgehend von dem computerimplementierten Verfahren zum Testen einer Benutzererfahrung zumindest eines Teils, insbesondere der Nutzerschnittstelle, einer Software gemäß dem Oberbegriff des Anspruchs 1, durch dessen kennzeichnende Merkmale, sowie ausgehend von der Anordnung zum Testen einer Benutzererfahrung zumindest eines Teils, insbesondere der Nutzerschnittstelle, einer Software gemäß Oberbegriff des Anspruch 12, durch dessen kennzeichnende Merkmale gelöst.

Sofern es in der nachfolgenden Beschreibung nicht anders angegeben ist, beziehen sich die Begriffe "durchführen", "umsetzen", "transformieren", "übertragen", "berechnen", "rechnergestützt", "rechnen", "feststellen", "generieren", "konfigurieren", "rekonstruieren", "ermitteln", "erfassen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" bzw. "Rechner" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit", "Speichereinrichtung" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger sowie eine Kombination aus einem oder mehreren dieser Elemente zur Bildung einer so genannten Cloud verstanden werden.

Unter einem "Modul" kann im Zusammenhang mit der Erfindung beispielsweise mindestens ein Prozessor und/oder mindestens eine Speichereinheit zum Speichern von Programmbefehlen verstanden werden, welche physisch an einem Ort, beispielsweise einem Teil einer Leiterplatte, funktional zusammenwirkend verbunden sind. Beispielsweise ist der Prozessor speziell dazu eingerichtet, die Programmbefehle derart auszuführen, dass der Prozessor Funktionen ausführt, um das erfindungsgemäße Verfahren oder einen Schritt des erfindungsgemäßen Verfahrens zu implementieren oder realisieren.

Bei dem erfindungsgemäßen computerimplementierten Verfahren zum Testen einer Benutzererfahrung zumindest eines Teils, insbesondere der Nutzerschnittstelle, einer Software wird eine Analyse von während einer Durchführung eines Testverfahrens zu zumindest dem Teil der Software erfassten, zumindest mit einer Nutzeraktivität einer Testperson korrelierenden Daten aufgrund von zumindest einem erfassten physiologischen Parameter der Testperson auf eine Untermenge der Daten beschränkt.

Durch das Verfahren wird unter anderem eine Beschränkung des Umfangs der Daten erreicht und für eine Analyse für eine etwaige Verbesserung der Software bereitgestellt. Durch die Beschränkung des Datenumfangs werden Ressourcen frei bzw. effektiver genutzt. Letzteres insbesondere auch durch die Tatsache, dass die Nutzung von physiologischen Parametern als Bedingung eine Grundlage für eine schnellere Optimierung bietet, da physiologische Parameter eine zusätzliche und zudem akkurate Dimension der Bewertung der Bedienerfahrung möglich machen, die auch ohne weiteres Feedback, beispielsweise durch den Nutzer, schon eine, vor allem eine automatisierte, Bewertung ermöglichen.

Die erfindungsgemäße Anordnung zum Testen einer Benutzererfahrung zumindest eines Teils, insbesondere der Nutzerschnittstelle, einer Software ist gekennzeichnet durch Mittel zur Durchführung des Verfahrens und/oder einer seiner Weiterbildungen, womit sie zur Implementierung und mutatis mutandis damit zur Realisierung der im Zusammenhang mit dem computerimplementierten Verfahren zum Testen einer Benutzererfahrung zumindest eines Teils, insbesondere der Nutzerschnittstelle, einer Software genannten Vorteile beiträgt.

Weitere vorteilhafte Ausgestaltungen und Weiterbildungen der Erfindung sind durch die Unteransprüche angegeben.

Eine bevorzugte Weiterbildung des erfindungsgemäßen Verfahrens weist folgende Schritte auf:
a) Ausführen zumindest eines Teils der Software gemäß dem Testverfahren,
b) Messen zumindest eines physiologischen Parameters während zumindest eines Zeitpunkts während der Ausführung, insbesondere jeweils für die Dauer der Ausführung einer Teilfunktion des Teils der Software,
c) Erfassen von zumindest mit einer Nutzeraktivität korrelierenden Daten, insbesondere zumindest der Nutzerinteraktion, insbesondere Interaktionssequenz, mit dem Teil der Software, beispielsweise während der Interaktion mit der Funktion,
d) Erfassen des physiologischen Parameters,
e) Detektieren einer Änderung des physiologischen Parameters,
f) Durchführung einer ersten Analyse der Änderung,
g) Selektieren der korrelierenden Daten in Abhängigkeit der ersten Analyse,
h) Wiederholen der Schritte a) bis f) bis eine Abbruchbedingung erfüllt ist.
i) Bereitstellen der selektierten Daten als Grundlage für die Durchführung einer zweiten Analyse auf Grundlage der selektierten korrelierenden Daten.

Hierdurch wir eine effektive Methode und erste einfache Implementierung zur automatischen Beschränkung von in der zweiten Analyse auszuwertenden Messdaten im Zusammenhang mit dem Softwartest definiert.

Gemäß einer weiteren vorteilhaften Weiterbildung des erfindungsgemäßen Verfahrens erfolgt ein Abspeichern der selektierten korrelierenden Daten zugeordnet zur Nutzeraktivität, insbesondere Interaktionssequenz, in eine lokale und/oder entfernte, insbesondere über ein Kommunikationsnetz erreichbare, beispielsweise Cloud-, Speichereinrichtung derart, dass sie durch ein einen die zweite Analyse bereitstellenden Algorithmus betreibendes Analysemodul abrufbar sind. Hierdurch wird eine zeitlich versetzt erfolgende zweite Analyse möglich. Beispielweise ist dies von Vorteil, wenn zu mehreren Testpersonen, was die Regel ist, Daten erfasst werden und erst wenn eine komplette Testreihe mit mehreren Personen abgeschlossen ist, die zweite Analyse hierauf basierend durchgeführt wird, so dass ein optimiertes Ergebnis möglich wird.

Alternativ oder ergänzend kann das erfindungsgemäße Verfahren derart weitergebildet werden, dass das Zuführen, insbesondere über eine Kommunikationsschnittstelle, zu einem einen die zweite Analyse bereitstellenden Algorithmus betreibenden Analysemodul erfolgt. Hierdurch können die Daten direkt zu dem die zweite Analyse durchführenden Modul bzw. der dieses Modul beherbergenden Einrichtung übertragen werden und hiermit auch gleichzeitig den Beginn der zweiten Analyse triggern.

Vorzugsweise wird das erfindungsgemäße Verfahren derart weitergebildet werden, dass die erste Analyse von Änderungen des physiologischen Parameters derart erfolgt, dass sie aufgrund der Detektion zumindest eines mit einer Erhöhung mit so genannten Arousals und/oder Stress korrelierenden physiologischen Parameters getriggert wird, wobei die Detektion der Erhöhung als Grundlage für die Beschränkung herangezogen wird. Diese Art der Parameter eignen sich besonders zur Detektion von für die Bedienungserfahrung signifikanten Vorgängen, die unter Umständen durch die Testperson bewusst gar nicht wahrgenommen werden, aber wenn sie so implementiert werden, auf Dauer bei negativer Ausprägung der Erregung (Arousal) entsprechend die Arbeit mit der Software erschweren bzw. belasten, oder bei positiver Ausprägung, die wenn sie so implementiert werden, eine auf Dauer die Arbeit mit der Software erleichternde Wirkung haben.

Bei einer weiteren vorzugsweisen Weiterbildung des erfindungsgemäßen Verfahrens wird die bei der Detektion erfolgende Nutzeraktivität und/oder die hierzu korrelierenden Daten, insbesondere eine Interaktionssequenz, dem erfassten Parameter zugeordnet und für die zweite Analyse bereitgestellt. Hierdurch ist eine der möglichen Kennzeichnungsformen gegeben, mit der die Daten für die zweite Analyse bereitzustellen sind, gekennzeichnet werden und darauf basierend selektierbar sind.

Bei einer weiteren vorteilhaften Weiterbildung des erfindungsgemäßen Verfahrens erfolgt das Detektieren durch zumindest einen Vergleich eines erfassten Werts eines physiologischen Parameters mit einem, insbesondere festlegbaren, Schwellwert. Dies ist eine einfache aber zugleich effektive Art das Detektieren umzusetzen. Insbesondere kann der Schwellwert dabei nach den neuesten Erkenntnissen und/oder basierend auf Optimierungsmaßnahmen auch angepasst werden. D.h. der Schwellwert wird insbesondere einstellbar implementiert.

Wird das erfindungsgemäße Verfahren derart weitergebildet, dass als physiologische Parameter die Herzfrequenz, der Puls, der Hautwiderstand, Pupillenänderungen, Parameter der Stimme, wie beispielsweise Tonhöhe, Lautstärke und/oder Sprechgeschwindigkeit, und/oder die Atemfrequenz erfasst werden, steht mindestens ein hinsichtlich seiner Korrelation mit Erregung und Stress sehr gut erforschter physiologischer Parameter zur Verfügung, für den zugleich auch die Sensoren bzw. Einrichtungen zur Erfassung teilweise sogar in einem Rechner und/oder weit verbreiteten Geräten, wie beispielsweise Smartphones, integriert sind, so dass sie leicht in das erfindungsgemäße Verfahren zur Durchführung integriert werden können.

Hierfür ist vor allem die Weiterbildung des erfindungsgemäßen Verfahrens, bei dem zum Erfassen zumindest eine, zur Erfassung von ein und/oder mehreren physiologischen Parametern betreibbare, Einrichtung, insbesondere ein, den zu analysierenden Teil der Software betreibender, Rechner, insbesondere dessen Mikrofon, ein Smartphone, eine Smartwatch und/oder eine vergleichbare, eine Kommunikationsschnittstelle bereitstellende, mindestens einen Sensor aufweisende Schnittstelle, betrieben wird, auf vorteilhafte Weise geeignet.

Das erfindungsgemäße Verfahren zeigt sich besonders flexibel, da es derart weitergebildet werden kann, dass als Testverfahren eine so genannte "Remote Usability Testing"-, "Moderated Usability Testing"-, "Unmoderated Usability Testing"-, "A/B Testing"-, "Guerrilla Testing"-, "Eye-Tracking", "Think-Aloud Protocol"-, "First Click Testing"-Methode und/oder eine Kombination aus einer oder mehreren dieser Methoden durchgeführt wird.

Wird das Verfahren gemäß Erfindung derart weitergebildet, dass die mit der Nutzeraktivität korrelierenden Daten auf Grundlage der Interaktion mit dem Teil der Software, insbesondere Interaktionssequenz, und auf Grundlage einer, insbesondere gemäß Think-Aloud-Protocol getriggerten, gesprochenen, während der Dauer der Interaktion, insbesondere Interaktionssequenz, erfassten Aussage gebildet werden, stehen neben den physiologischen Reaktionen auch die bewussten Empfindungen für die zweite Analyse zur Verfügung.

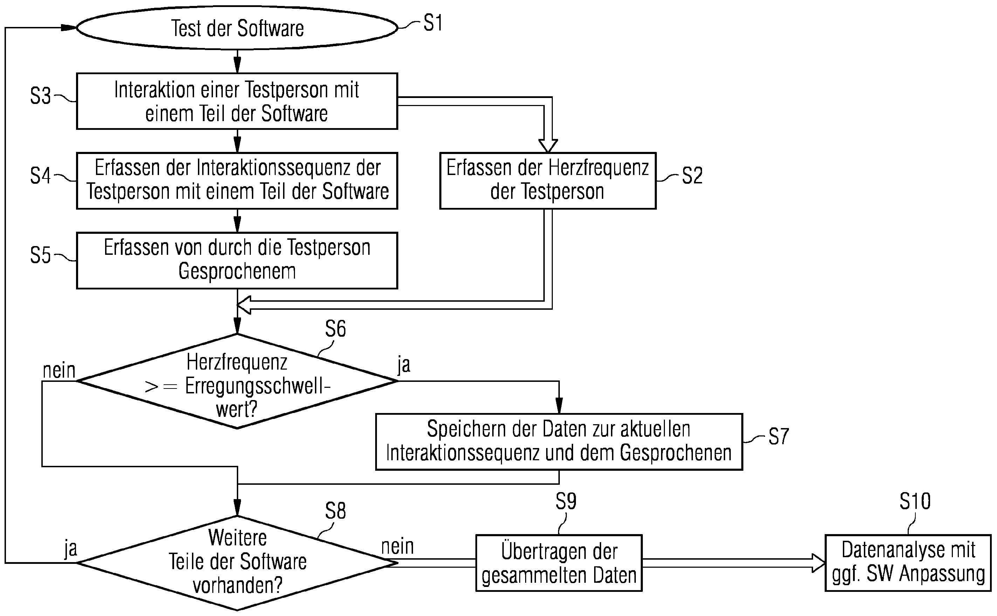

Im Folgenden werden weitere Vorteile und Details der Erfindung sowie Weiterbildungen der Erfindung anhand eines in der einzigen Figur dargestellten Ausführungsbeispiels näher erläutert. Es zeigt die
- Figur (FIG): schematisch einen beispielhaften Ablauf des computerimplementierten Verfahrens zum Testen einer Benutzererfahrung zumindest eines Teils, insbesondere der Nutzerschnittstelle, einer Software.

Bei dem im Folgenden in der Figur (FIG) erläuterten Ausführungsbeispiel handelt es sich um eine bevorzugte Ausführungsform anhand dessen Vorteile sowie weitere Ausführungsformen bzw. Weiterbildungen der Erfindung näher erläutert werden.

Insbesondere zeigen die nachfolgenden Erläuterungen lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis der unabhängigen Ansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

Bei dem Ausführungsbeispiel bzw. den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

In der einzigen Figur FIG ist schematisch ein Ablauf eines ersten Ausführungsbeispiels des erfindungsgemäßen Verfahrens zu erkennen.

Dieses startet aus einem mit ersten Schritt S1 bezeichneten Zustand, aus dem heraus der Test einer Software hinsichtlich Bedienererfahrung die weiteren Schritte des Ausführungsbeispiels der Erfindung durchführt. Zu erkennen ist, dass hier in einem zweiten Schritt S2 ein Erfassen der Herzfrequenz der Testperson beginnt und gemäß Ausführungsbeispiel mindestens für die Dauer der Interaktion fortgeführt wird. Hierauf folgt ein dritter Schritt S3, in dem die Interaktion der Testperson mit dem Teil der Software, die in diesem Durchlauf getestet wird, stattfindet. In diesem dritten Schritt S3 kann beispielsweise die Aufforderung eines Testmoderators zum Test erfolgen und/oder mit Fragestellungen zu der gemäß dem aktuellen Teil der Software folgenden Interaktion begonnen werden, die von der Testperson mündlich, in der Regel begleitend zur Interaktionssequenz, die zu diesem Teil der Software gehört, beantwortet werden.

Dabei werden sowohl die Interaktionssequenz, beispielsweise Art und/oder Abfolge der Aktionen, Tempo der Ausführung und/oder weitere für eine Analyse der Bedienerfahrung nutzbare Parameter, erfasst, wobei dies in einem vierten Schritt S4 erfolgt, als auch in einem fünften Schritt S5 die gesprochenen Antworten erfasst und dabei auch in eine datenverarbeitbare Form gebracht, wobei währenddessen die ganze Zeit die im zweiten Schritt S2 gestartete Herzfrequenzerfassung läuft.

Bei der erfassten Herzfrequenz wird dabei geprüft, ob diese auf eine Erregung (Arousal) hindeutet. Gemäß dem Ausführungsbeispiel erfolgt hierzu in einem sechsten Schritt S6 ein Schwellwertvergleich. Da erfindungsgemäß die Daten im Zusammenhang mit der Interaktionssequenz selektiert werden sollen, die mit einem Arousal oder Stresszustand einhergehen, kann der Schwellwertvergleich des sechsten Schritts S6 kontinuierlich laufend oder zu diskreten Zeitpunkten parallel zu den Erfassungen der Schritte S2 bis S5 erfolgen.

Denkbar ist auch, dass die aufgezeichnete Herzfrequenz nach Abschluss der Interaktionssequenz im sechsten Schritt S6 überprüft wird und bei allen Punkten, wo die Schwelle überschritten wird, die zugehörigen erfassten Daten für eine Speicherung markiert werden, so dass in einem siebten Schritt S7 diejenigen Daten, die zu einem derart detektierten Arousal gehören, gespeichert werden können.

Daraufhin wird in einem achten Schritt S8 geprüft, ob es noch weitere zu testende Teile der Software gibt. Ist dies der Fall, wiederholen sich die Schritte S2 bis S7 für einen weiteren Teil der Software. Ist es jedoch der Fall, bedeutet es, dass der Test beendet ist und dass die bis dato gesammelten Daten für eine tiefergehende Analyse zur Verbesserung der Software genutzt werden können. Hierzu werden gemäß Ausführungsbeispiel in einem neunten Schritt S9 die gesammelten Daten genutzt, um mit dem Übertragen der Daten beispielsweise einen (halb)automatischen Analysealgorithmus zu triggern, um als Ergebnis eine hinsichtlich Benutzererfahrung verbesserte Version der Software bereitstellen zu können, sofern die gemäß dem erfindungsgemäßen Verfahren beschränkten und damit effizienter auswertbaren, schneller aber auch geringeren Speicherplatz bzw. Übertragungsbandbreite benötigenden Testdaten in der Analyse eine weitere Verbesserung nahelegen.

Bei dem Ausführungsbeispiel wird also in der Regel ein "thinking-aloud" (Think-Aloud-Protocol) Test besonders geeignet sein. Die Erfindung ist aber hierauf nicht beschränkt, wie in der folgenden Diskussion weiterer Details und Vorteile dieses Ausführungsbeispiels sowie anderer Ausführungsformen deutlich wird.

Bei dem Think-Aloud werden verbale Infos, die durch "thinking aloud" und Beantwortung von Fragen während des Benutzererfahrung (User Experience, UX) Tests generiert werden, erfindungsgemäß mit physiologischen Parametern, die simultan zum Think-Aloud Prozess erfasst werden, verknüpft.

Auffälligkeiten in den physiologischen Parametern werden damit zum Ausganspunkt für gezielte UX- Evaluationen gemacht. Es wird dadurch eine Fokussierung und technisch gesehen eine Datenbeschränkung der Analyse auf Daten zu Zeitpunkten von Änderungen der physiologischen Parameter bewirkt.

Diese Änderungen geben Hinweise auf Affekte, die im Zuge der Interaktion mit dem System (zur Lösung der Aufgabe bzw. gemäß Ausführungsbeispiel dem Teil der Software, der im UX-Test getestet wird) ausgelöst werden und auf eine höhere Erregung (Arousal) deuten, die wiederum ein Indikator dafür ist, dass hier eine besonders positive oder (in der Regel wahrscheinlicher) negative UX vorliegt.

Die Situation, in der sich die physiologischen Parameter signifikant verändern, wird daher zum Anlass genommen, die Inhalte des Think-Aloud und die konkret vorliegende User-System Interaktion genauer bzgl. der UX zu analysieren, um sie anschließend zu optimieren (im Falle negativer UX Erlebnisse durch die Testperson) bzw. beizubehalten (im Falle positiver UX Erlebnisse), wobei durch die Fokussierung und Beschränkung der Daten im Grunde alle beteiligten Module und Einrichtungen hinsichtlich Ressourcenverbrauch entlastet werden.

Dies liegt unter anderem darin, dass bei diesem Vorgehen nicht mehr alle Daten, sondern nur die, die als auffällig infolge der veränderten physiologischen Parameter identifiziert werden, ausgewertet werden.

Physiologische Parameter werden während des UX-Tests / Think-Aloud Vorgehens erfasst.

Hierzu kann die Herzfrequenz, bzw. der Puls, beispielsweise mit einer Smart Watch gemessen werden. Es können alternativ oder ergänzend auch der Hautwiderstand und/oder die Atemfrequenz gemessen werden, da diese auch Hinweise auf eine Veränderung des Arousals und Stress geben.

Die Änderungen der physiologischen Parameter, die eine Erhöhung des Arousals bzw. Stress indizieren, dienen als Trigger für tiefere UX-Analyse. Die der Veränderung der Parameter und dem erhöhten Arousal-/Stresslevel zugeordnete Interaktionssequenz zwischen Testperson und Benutzerschnittstelle (Userinterface, Ul) wird somit als Effekt automatisch selektiert, um dann in der Tiefe analysiert zu werden. Auf Basis der Ergebnisse wird dann das Ul und damit das Produkt optimiert.

Es wird als einer der wesentlichen Vorteile nicht mehr der gesamte Usability Test /Thinking Aloud Prozess analysiert, sondern nur die auffälligen Stellen in der Ul-Tester (Kunden)- System Interaktion, die durch Analyse physiologischer Parameter identifiziert werden.

Das Vorgehen ist wie gesagt nicht auf Think-Aloud Tests beschränkt, sondern kann mit weiteren Usability-Test-/Evaluationsverfahren, wie beispielsweise auf dem so genannten "Eye Tracking", weitergebildet werden.

*Unabhängig vom grammatikalischen Geschlecht eines bestimmten Begriffes sind Personen mit männlicher, weiblicher oder anderer Geschlechteridentität mit umfasst.*

## Patentansprüche

1. Computerimplementiertes Verfahren zum Testen einer Benutzererfahrung zumindest eines Teils, insbesondere der Nutzerschnittstelle, einer Software,
**dadurch gekennzeichnet, dass** eine Analyse von während einer Durchführung eines Testverfahrens zu zumindest dem Teil der Software erfassten, zumindest mit einer Nutzeraktivität einer Testperson korrelierenden Daten aufgrund von zumindest einem erfassten physiologischen Parameter der Testperson auf eine Untermenge der Daten beschränkt wird.

2. Verfahren nach dem vorhergehenden Anspruch, **gekennzeichnet durch** folgende Schritte:
a) Ausführen zumindest eines Teils der Software gemäß dem Testverfahren,
b) Messen zumindest eines physiologischen Parameters während zumindest eines Zeitpunkts während der Ausführung, insbesondere jeweils für die Dauer der Ausführung einer Teilfunktion des Teils der Software,
c) Erfassen von zumindest mit einer Nutzeraktivität korrelierenden Daten, insbesondere zumindest der Nutzerinteraktion, insbesondere Interaktionssequenz, mit dem Teil der Software, beispielsweise während der Interaktion mit der Funktion,
d) Erfassen des physiologischen Parameters,
e) Detektieren einer Änderung des physiologischen Parameters,
f) Durchführung einer ersten Analyse der Änderung,
g) Selektieren der korrelierenden Daten in Abhängigkeit der ersten Analyse,
h) Wiederholen der Schritte a) bis f) bis eine Abbruchbedingung erfüllt ist.
i) Bereitstellen der selektierten Daten als Grundlage für die Durchführung einer zweiten Analyse auf Grundlage der selektierten korrelierenden Daten.

3. Verfahren nach dem vorhergehenden Anspruch, **gekennzeichnet durch** ein Abspeichern der selektierten korrelierenden Daten zugeordnet zur Nutzeraktivität, insbesondere Interaktionssequenz, in eine lokale und/oder entfernte, insbesondere über ein Kommunikationsnetz erreichbare, beispielsweise Cloud-, Speichereinrichtung derart, dass sie durch ein einen die zweite Analyse bereitstellenden Algorithmus betreibendes Analysemodul abrufbar sind.

4. Verfahren nach einem der beiden vorhergehenden Ansprüche,
**dadurch gekennzeichnet, dass** das Zuführen, insbesondere über eine Kommunikationsschnittstelle, zu einem einen die zweite Analyse bereitstellenden Algorithmus betreibenden Analysemodul erfolgt.

5. Verfahren nach einem der vorhergehenden Ansprüche,
**dadurch gekennzeichnet, dass** die erste Analyse von Änderungen des physiologischen Parameters derart erfolgt, dass sie aufgrund der Detektion zumindest eines mit einer Erhöhung von zumindest einem mit so genannten Arousals und/oder Stress korrelierenden physiologischen Parameters getriggert wird, wobei die Detektion der Erhöhung als Grundlage für die Beschränkung herangezogen wird.

6. Verfahren nach dem vorhergehenden Anspruch,
**dadurch gekennzeichnet, dass** die Beschränkung derart erfolgt, dass die bei der Detektion erfolgende Nutzeraktivität und/oder die hierzu korrelierenden Daten, insbesondere eine Interaktionssequenz, dem erfassten Parameter zugeordnet und für die zweite Analyse bereitgestellt wird.

7. Verfahren nach einem der vorhergehenden Ansprüche,
**dadurch gekennzeichnet, dass** das Detektieren durch zumindest einen Vergleich eines erfassten Werts eines physiologischen Parameters mit einem, insbesondere festlegbaren, Schwellwert erfolgt.

8. Verfahren nach einem der vorhergehenden Ansprüche,
**dadurch gekennzeichnet, dass** als physiologische Parameter die Herzfrequenz, der Puls, der Hautwiderstand, Pupillenänderungen, Parameter der Stimme, wie beispielsweise Tonhöhe, Lautstärke und/oder Sprechgeschwindigkeit, und/oder die Atemfrequenz erfasst werden.

9. Verfahren nach einem der vorhergehenden Ansprüche,
**dadurch gekennzeichnet, dass** zum Erfassen zumindest eine, zur Erfassung von ein und/oder mehreren physiologischen Parametern betreibbare, Einrichtung, insbesondere ein, den zu analysierenden Teil der Software betreibender, Rechner, insbesondere dessen Mikrofon, ein Smartphone, eine Smartwatch und/oder eine vergleichbare eine Kommunikationsschnittstelle bereitstellende, mindestens einen Sensor aufweisende Schnittstelle, betrieben wird.

10. Verfahren nach einem der vorhergehenden Ansprüche,
**dadurch gekennzeichnet, dass** als Testverfahren eine so genannte "Remote Usability Testing"-, "Moderated Usability Testing"-, "Unmoderated Usability Testing"-, "A/B Testing"-, "Guerrilla Testing"-, "Eye-Tracking", "Think-Aloud Protocol"-, "First Click Testing"-Methode und/oder eine Kombination aus einer oder mehreren dieser Methoden durchgeführt wird.

11. Verfahren nach dem vorhergehenden Anspruch,
**dadurch gekennzeichnet, dass** die mit der Nutzeraktivität korrelierenden Daten auf Grundlage der Interaktion mit dem Teil der Software, insbesondere Interaktionssequenz, und auf Grundlage einer, insbesondere gemäß Think-Aloud-Protocol getriggerten, gesprochenen, während der Dauer der Interaktion, insbesondere Interaktionssequenz, erfassten Aussage gebildet werden.

12. Anordnung zum Testen einer Benutzererfahrung zumindest eines Teils, insbesondere der Nutzerschnittstelle, einer Software,
**dadurch gekennzeichnet, dass** verbale Infos, die durch thinking aloud und Beantwortung von Fragen während des UX Tests generiert werden, mit physiologischen Parametern, die simultan zum Thinking Aloud erfasst werden, verknüpft werden.
